# EUROPÄISCHE PATENTANMELDUNG

(11) **EP 3 376 184 A2**
(43) Veröffentlichungstag der Anmeldung: **19.09.2018**
(21) Anmeldenummer: 18156658.9
(22) Anmeldetag: 14.02.2018
(51) Int. Cl.: G01G 19/02, G01G 21/26, G01G 23/01

(54) **VORRICHTUNG UND VERFAHREN ZUM KALIBRIEREN EINES WEIGH-IN-MOTION SENSORS**

(30) Priorität: 28.02.2017 EP 17158282
(71) Anmelder: Kistler Holding AG, 8408 Winterthur (CH)
(72) Erfinder: Hofmann, Adrian, 8444 Henggart (CH); Wuhrmann, Thomas, 8500 Frauenfeld (CH); Aeschbacher, Manuel, 3005 Bern (CH)

(57) **Zusammenfassung**

Die Erfindung betrifft eine Vorrichtung (1) zum Kalibrieren eines in eine Fahrbahn (2) eingebauten Weigh-In-Motion (WIM) Sensors (3); welche Vorrichtung (1) mindestens einen Kraftsensor (12) aufweist, welcher Kraftsensor (12) eine Referenzkraft erfasst, mit welcher Referenzkraft der WIM Sensor (3) kalibrierbar ist; welche Vorrichtung (1) einen Applikator (15-15") aufweist, mit welchem Applikator (15-15") die Referenzkraft in die Fahrbahn (2) einbringbar ist; wobei die Vorrichtung (1) einen Aktuator (11) aufweist, welcher Aktuator (11) die Referenzkraft erzeugt; und wobei Aktuator (11), Kraftsensor (12) und Applikator (15-15") mechanisch miteinander verbunden sind und ein Gefährt (5-5") bilden.

## Beschreibung

### Technisches Gebiet

Die Erfindung betrifft eine Vorrichtung zum Kalibrieren eines Weigh In Motion (WIM) Sensors nach dem Oberbegriff des unabhängigen Anspruchs 1. Die Erfindung betrifft auch ein Verfahren zum Kalibrieren eines WIM Sensors nach dem Oberbegriff des unabhängigen Anspruchs 10.

### Stand der Technik

Ein WIM Sensor ist ein in eine Fahrbahn einbaubarer Kraftaufnehmer. Mit dem in die Fahrbahn eingebauten WIM Sensor lässt sich eine Gewichtskraft eines auf der Fahrbahn fahrenden Fahrzeuges erfassen. Aus der erfassten Gewichtskraft lassen sich vielfältige Verkehrsinformationen wie Radlast, Achslast, Gesamtgewicht, Reifendruck des fahrenden Fahrzeuges bestimmen. Häufig ist der WIM Sensor ein piezoelektrischer Kraftaufnehmer, welcher die Gewichtskraft des mit normaler Verkehrsgeschwindigkeit über den WIM Sensor fahren Fahrzeuges erfasst. Der piezoelektrische Kraftaufnehmer gibt ein der Grösse der erfassten Gewichtskraft proportionales elektrisches Signal ab, welches an eine Auswerteeinheit weitergeleitet und dort ausgewertet wird. WIM Sensor und Auswerteeinheit bilden somit ein System zum automatisierten Erfassen von Verkehrsinformationen.

Der WIM Sensor wird vor Ort in die Fahrbahn eingebaut, was zu Unterschieden bei einer Einbaugüte führt. Die Einbaugüte ist der Ist-Zustand des in der Fahrbahn eingebauten WIM Sensors. Die Einbaugüte berücksichtigt die Beschaffenheit eines Fahrbahnaufbaus mit Oberbau, Unterbau und Untergrund. Hohlräume im Fahrbahnaufbau, beispielsweise hervorgerufen durch Wasserschäden, wirken sich auf Güteparameter des WIM Sensors wie Empfindlichkeit, Linearität, Hysterese, usw. aus. Aber unterschiedliche Einbautiefen von WIM Sensoren unterhalb einer Oberfläche der Fahrbahn wirken sich auf deren Güteparameter aus. Und das Vorhandensein von Schwellen oder Senken in der Oberfläche der Fahrbahn haben einen Einfluss auf die Güteparameter. Die Empfindlichkeit ist das Verhältnis einer Änderung des vom piezoelektrischen Kraftaufnehmer abgegebenen elektrischen Signals zu einer Änderung der erfassten Gewichtskraft. Die Linearität ist eine Abweichung der Proportionalität zwischen der Grösse der erfassten Gewichtskraft und dem vom piezoelektrischen Kraftaufnehmer abgegebenen elektrischen Signal. Die Hysterese ist eine grösste Differenz beim vom piezoelektrischen Kraftaufnehmer abgegebenen elektrischen Signal für eine Grösse einer erfassten Gewichtskraft, wenn die Grösse zuerst mit zunehmender und dann mit abnehmender Gewichtskraft erreicht wird.

Es ist ein Wunsch, die Einbaugüte des in der Fahrbahn eingebauten WIM Sensors mit hoher Genauigkeit zu charakterisieren.

Zudem besteht ein Bedürfnis, die Verkehrsinformationen mit hoher Genauigkeit zu erfassen, um so rechtsverbindlich eine Überlastkontrolle oder eine gewichtsbasierte Mauterhebung zu ermöglichen. So empfiehlt die Internationale Organisation für das gesetzliche Messwesen (OIML) in der Norm OIML R-134 eine Genauigkeit von bis zu 0.10% beim Bestimmen des Gesamtgewichtes des fahrenden Fahrzeuges. Dazu wird ein Kalibrieren des in die Fahrbahn eingebauten WIM Sensors gefordert.

Die Schrift CH702963A1 offenbart ein solches Verfahren zum Kalibrieren eines in eine Fahrbahn eingebauten WIM-Sensors. Hierzu wird der WIM Sensor von einem Kalibrierfahrzeug überfahren, welches ein Dynamometer aufweist. Das Dynamometer ist an einem Rad des Kalibrierfahrzeuges montiert. Während der Überfahrt wird vom Dynamometer eine am Rad angreifende Radkraft zeit- oder ortsabhängig erfasst und vom WIM Sensor wird eine Gewichtskraft des Kalibrierfahrzeuges erfasst. Das Dynamometer erfasst die Radkraft mit einer deutlich höheren Genauigkeit als der WIM Sensor die Gewichtskraft. Das Dynamometer gibt der erfassten Radkraft entsprechende Radkraftdaten ab und der WIM Sensor gibt der erfassten Gewichtskraft entsprechende Gewichtskraftdaten ab, welche Daten in einer Auswerteeinheit miteinander verglichen werden. Aus dem Vergleich wird eine Kalibrierfunktion des WIM Sensors ermittelt.

Es hat sich herausgestellt, dass das in der Schrift CH702963A1 offenbarte Kalibrierverfahren vom Zustand der Fahrbahn abhängt. Die Fahrbahn ist einer Abnutzung ausgesetzt. Schlaglöcher und Spurrillen in der Fahrbahn in der Nähe des WIM Sensors können die Kalibrierfunktion verfälschen, die Kalibrierfunktion ist dann ungenau. Das Kalibrierverfahren muss dann wiederholt werden, was zeitaufwändig ist.

Die Schrift CH702963A1 erwähnt auch die Möglichkeit, Achsdeformationen des Kalibrierfahrzeuges zu messen, und diese gemessenen Achsdeformationen mit dem Kalibrierfahrzeuggewicht in eine Beziehung zu setzen. Dies setzt allerdings eine Kalibrierung des Kalibrierfahrzeuges selber voraus, was zeitaufwändig ist und Kosten verursacht.

Eine erste Aufgabe der vorliegenden Erfindung ist es, eine Vorrichtung zum Kalibrieren eines WIM Sensors bereitzustellen, welche den in der Fahrbahn eingebauten WIM Sensor mit hoher Genauigkeit kalibriert. Eine weitere Aufgabe der Erfindung besteht darin, ein Verfahren zum Kalibrieren eines WIM Sensors aufzuzeigen, welches den in der Fahrbahn eingebauten WIM Sensor mit hoher Genauigkeit kalibriert.

### Darstellung der Erfindung

Zumindest eine dieser Aufgaben wird durch die Merkmale der unabhängigen Ansprüche gelöst.

Die Erfindung betrifft eine Vorrichtung zum Kalibrieren eines in eine Fahrbahn eingebauten Weigh-In-Motion (WIM) Sensors; welche Vorrichtung mindestens einen Kraftsensor aufweist, welcher Kraftsensor eine Referenzkraft erfasst, mit welcher Referenzkraft der WIM Sensor kalibrierbar ist; welche Vorrichtung einen Applikator aufweist, mit welchem Applikator die Referenzkraft in die Fahrbahn einbringbar ist; wobei die Vorrichtung einen Aktuator aufweist, welcher Aktuator die Referenzkraft erzeugt; und wobei Aktuator, Kraftsensor und Applikator mechanisch miteinander verbunden sind und ein Gefährt bilden.

Im Stand der Technik der Schrift CH702963A1 wird eine an einem Rad eines Kalibrierfahrzeuges angreifende Radkraft erfasst, und ein WIM Sensor wird mit dem Gewicht des Kalibrierfahrzeuges kalibriert. Dabei wird angenommen, dass Radkraft und Kalibrierfahrzeuggewicht in einer festen Beziehung zueinander stehen. Es ist nun aber erkannt worden, dass die Radkraft vom Zustand der Fahrbahn abhängt und sich bei Vorhandensein von Schlaglöchern, Spurrillen und auch mit der Beschaffenheit des Fahrbahnuntergrundes ändern kann. Auch haben sich Vibrationen des Kalibrierfahrzeuges als nachteilig für das Kalibrieren erwiesen, denn diese Vibrationen äussern sich als Störkraft, welche sowohl der erfassten Radkraft, als auch der erfassten Gewichtskraft überlagert ist.

Hier setzt die erfinderische Vorrichtung ein, in dem ein Aktuator eine Referenzkraft mit hoher Genauigkeit erzeugt. Die erzeugte Referenzkraft wird mit hoher Genauigkeit von einem Kraftsensor erfasst und mit hoher Genauigkeit von einem Applikator in die Fahrbahn eingebracht. Dazu sind Aktuator, Kraftsensor und Applikator mechanisch miteinander verbunden und bilden ein Gefährt. Das Erzeugen, Erfassen und Einbringen der Referenzkraft erfolgen somit zeitgleich und mit hoher Genauigkeit in einem Gefährt.

Die Erfindung betrifft auch ein Verfahren zum Kalibrieren eines in eine Fahrbahn eingebauten Weigh-In-Motion (WIM) Sensors, welcher WIM Sensor entlang einer Kalibrierstrecke kalibriert wird; wobei eine Referenzkraft von mindestens einem Kraftsensor erfasst wird; wobei die Referenzkraft von einem Applikator entlang der Kalibrierstrecke in die Fahrbahn eingebracht wird; wobei die Referenzkraft am Einbauort des WIM Sensors vom WIM Sensor als Gewichtskraft erfasst wird; und wobei die vom WIM Sensor erfasste Gewichtskraft mit der erfassten Referenzkraft verglichen wird; wobei eine Position der Kalibrierstrecke bezüglich eines Einbauortes des WIM Sensors von mindestens einen Positionssensor erfasst wird; und wobei der Applikator entlang der Kalibrierstrecke von einer Antriebseinheit verfahren wird.

Im erfinderischen Verfahren wird eine Position der Kalibrierstrecke bezüglich eines Einbauortes des WIM Sensors mit hoher Genauigkeit von einem Positionssensor erfasst. Eine Referenzkraft wird daraufhin von einem Applikator entlang der Kalibrierstrecke in die Fahrbahn eingebracht. Die Position der Kalibrierstrecke wird also mit hoher Genauigkeit erfasst und eine Einbaugüte des in der Fahrbahn eingebauten WIM Sensors wird somit vom Kraftsensor und vom WIM Sensor ebenfalls mit hoher Genauigkeit charakterisiert. So ermöglicht das erfinderische Verfahren, einen Einbauort des WIM Sensors mit Millimetergenauigkeit zu erfassen und den Applikator mit Millimetergenauigkeit bezüglich des Einbauortes des WIM Sensors zu verfahren. Befindet sich nun eine Schwelle oder Senke in der Oberfläche der Fahrbahn am Einbauort des WIM Sensors, so wird dies vom Kraftsensor und vom WIM Sensor mit Millimetergenauigkeit charakterisiert und beim Kalibrieren als solches berücksichtigt. Im Stand der Technik der Schrift CH702963A1 erfolgt eine Ortsauflösung eines Kalibrierfahrzeuges mittels GPS Signalen, was bedeutend weniger genau ist.

### Kurze Beschreibung der Zeichnungen

Im Folgenden wird die Erfindung beispielhaft unter Beizug der Figuren näher erklärt. Es zeigen
- Fig. 1: eine schematische Ansicht einer bevorzugten Ausführungsform einer Vorrichtung zum Kalibrieren eines in eine Fahrbahn eingebauten WIM Sensors, wo der WIM Sensor entlang einer Fahrtrichtung kalibriert wird;
- Fig. 2: eine schematische Ansicht der Vorrichtung nach Fig. 1, wo der WIM Sensor entlang einer Sensorlängsrichtung kalibriert wird;
- Fig. 3: eine perspektivische Ansicht eines Teils der Vorrichtung nach Fig. 1 oder 2, wo der WIM Sensor entlang der Sensorlängsrichtung kalibriert wird;
- Fig. 4: eine Draufsicht eines Teils der Vorrichtung nach Fig. 1 bis 3, wo der WIM Sensor entlang der Sensorlängsrichtung kalibriert wird;
- Fig. 5: eine perspektivische Ansicht eines Teils einer Führung eines Längsträgers bezüglich eines Unterbaus eines Rahmens der Vorrichtung nach Fig. 1 bis 4;
- Fig. 6: eine perspektivische Ansicht eines Teils einer ersten Ausführungsform eines Gefährtes mit breiträdrigem Applikator der Vorrichtung nach Fig. 1 bis 4;
- Fig. 7: eine perspektivische Ansicht eines Teils einer zweiten Ausführungsform eines Gefährtes mit schmalrädrigem Applikator der Vorrichtung nach Fig. 1 bis 4;
- Fig. 8: eine perspektivische Ansicht eines Teils einer dritten Ausführungsform eines Gefährtes mit stempelförmigem Applikator der Vorrichtung nach Fig. 1 bis 4; und
- Fig. 9: eine schematische Darstellung der Vorrichtung nach Fig. 1 bis 4 zum Kalibrieren eines in eine Fahrbahn eingebauten WIM Sensors.

### Wege zur Ausführung der Erfindung

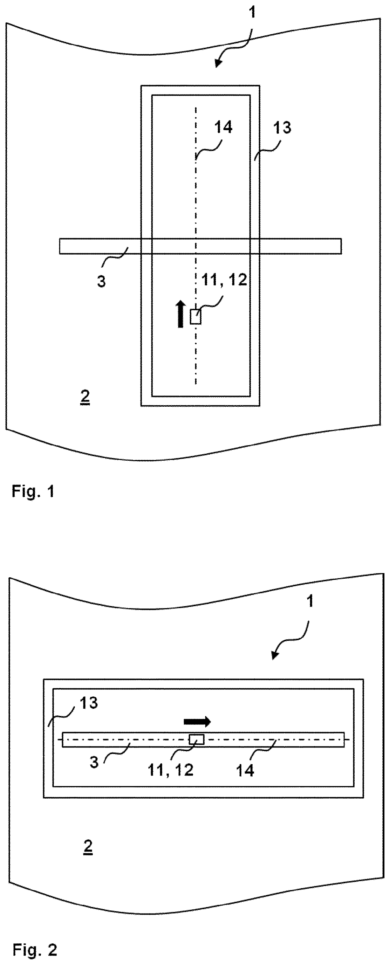

Die Fig. 1 und 2 zeigen zwei schematische Ansichten einer bevorzugten Ausführungsform einer Vorrichtung 1 zum Kalibrieren eines in eine Fahrbahn 2 eingebauten WIM Sensors 3. Auf der Fahrbahn 2 fahren Fahrzeuge in oder entgegen einer Fahrtrichtung. Die Fahrbahn 2 weist einen Belag auf. Der Belag besteht aus mechanisch beständigem Material wie Asphalt, Beton, usw.

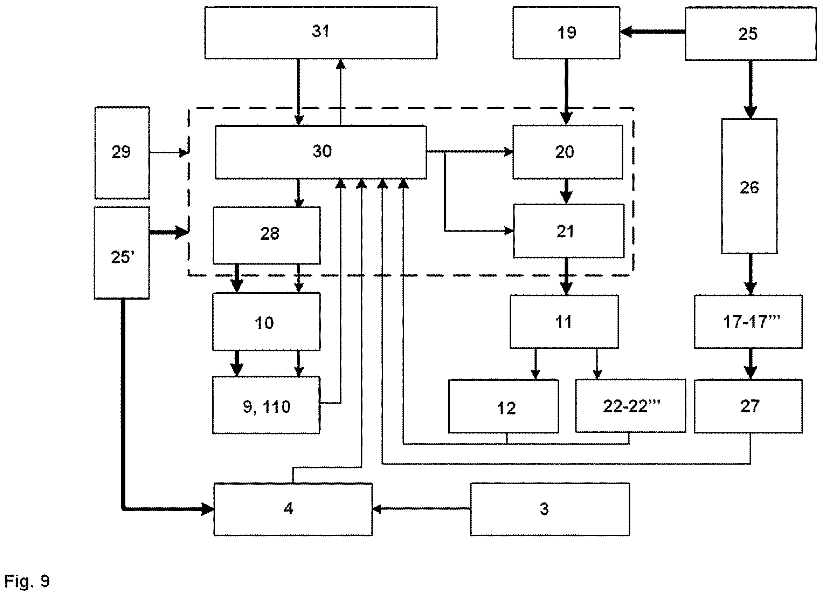

Vorzugsweise ist der WIM Sensor 3 ein piezoelektrischer Kraftaufnehmer, welcher einer Grösse einer erfassten Gewichtskraft proportionale elektrische Signale abgibt. Der WIM Sensor 3 weist in einer Sensorlängsrichtung mehrere piezoelektrische Aufnehmerelemente auf, welche vorzugsweise in einem gegenseitigen Abstand von 80mm bis 120mm angeordnet sind. Vorzugsweise erfolgt das Erfassen der Gewichtskraft mit einer zeitlichen Auflösung von kleiner 1kHz. Die elektrischen Signale werden an eine Auswerteeinheit 4 weitergeleitet und dort ausgewertet. Dies ist in der schematischen Darstellung der Vorrichtung 1 nach Fig. 9 dargestellt.

Der WIM-Sensor 3 liegt in einer Nut der Fahrbahn 2 und ist mit einer Abdeckmasse vergossen. Die Nut ist so gross bemessen, dass der WIM Sensor 3 darin vollständig Platz hat. Die Nut erstreckt sich unterhalb einer Oberfläche der Fahrbahn 2 in Sensorlängsrichtung senkrecht oder gewinkelt zur Fahrtrichtung. Vorzugsweise weist der WIM Sensor 3 in Sensorlängsrichtung eine Länge von 1000mm oder mehr auf, während er in Fahrtrichtung eine Breite von rund 30mm bis 50mm und in einer Vertikalrichtung eine Höhe von 20mm bis 70mm aufweist. Die Abdeckmasse bedeckt den WIM Sensor 3 und ist bündig mit einer Oberfläche der Fahrbahn 2. Unter bündig im Sinne der Erfindung wird gemeint, dass die Abdeckmasse aus der Oberfläche der Fahrbahn 2 nicht herausragt. Die Vertikalrichtung steht senkrecht zur Oberfläche der Fahrbahn 2. Der WIM Sensor 3 ist vollständig in der Fahrbahn 2 eingegossen und liegt in Vertikalrichtung rund 50mm unterhalb der Oberfläche der Fahrbahn 2. Die Abdeckmasse unterscheidet sich vom Belag von der Farbe und auch von der chemischen Struktur, so dass die Abdeckmasse einen Einbauort des WIM Sensors 3 in der Fahrbahn 2 gut kennzeichnet. In Fig. 1 bis 4 steht die Sensorlängsrichtung senkrecht zur Fahrtrichtung. Bei Kenntnis der vorliegenden Erfindung kann der WIM Sensor auch andere Längen und Breiten haben, so kann der WIM Sensor rechteckig sein, mit einer Breite von 200mm bis 800mm, einer Länge von 200mm bis 800mm und einer Höhe von 20mm bis 70mm. Auch kann der WIM Sensor kreisförmig sein, mit einem Durchmesser von 200mm bis 800mm und einer Höhe von 20mm bis 70mm. Zudem kann der WIM Sensor ohne mit Abdeckmasse vergossen zu sein in der Nut in der Fahrbahn liegen. Anstelle von Abdeckmasse kann der WIM Sensor eine Deckplatte aufweisen, welche bündig mit der Oberfläche der Fahrbahn ist. Der WIM Sensor kann ein Dynamometer sein.

Die Vorrichtung 1 wird am zu kalibrierenden WIM Sensor 3 auf der Fahrbahn 2 aufgebaut und sie wird nach dem Kalibrieren des WIM Sensors 3 von der Fahrbahn 2 wieder abgebaut. Dazu wird die Vorrichtung 1 auf einem Transportfahrzeug antransportiert und wieder abtransportiert. Während des Kalibrierens ist die Fahrbahn 2 für den Fahrzeugverkehr nicht benutzbar. Für einen raschen Auf- und Abbau werden nur wenige Komponenten der Vorrichtung 1 auf die Fahrbahn 2 gestellt, während weitere Komponenten der Vorrichtung 1 im Transportfahrzeug angeordnet bleiben. Die wenigen Komponenten wie ein Aktuator 11 und mindestens ein Kraftsensor 12 sind auf einem Rahmen 13 angeordnet, so dass nur der Rahmen 13 auf die Fahrbahn 2 gestellt wird. Weitere Komponenten der Vorrichtung 1 wie eine Datenerfassungseinheit 30, eine Recheneinheit 31, eine Pneumatikpumpe 19, mindestens eine elektrische Stromversorgung 25, 25', eine Vakuumpumpe 26, usw. auf, bleiben im Transportfahrzeug angeordnet.

Der Rahmen 13 besteht aus mechanisch beständigem Material wie aus Reinmetallen, Aluminiumlegierungen, Nickellegierungen, Kobaltlegierungen, Eisenlegierungen, usw. Der Rahmen 13 weist einen Unterbau 131 und einen Längsträger 132 auf. Bezüglich der Fahrbahn 2 ist der Unterbau 131 unterhalb des Längsträgers 132 angeordnet. In Draufsicht ist der Unterbau 131 vorzugsweise rechteckig. Der Rahmen 13 wird so auf die Fahrbahn 2 gestellt, dass ein Oberflächenbereich der Fahrbahn 2 am Einbauort des WIM Sensors 3 vom Rahmen 13 umschlossen wird. Auch der vom Rahmen 13 umschlossene Oberflächenbereich der Fahrbahn 2 ist in den Fig. 1 und 2 vorzugsweise rechteckig.

Vorzugsweise weist der Unterbau 131 mehrere Rollen auf, mit denen er auf der Fahrbahn 2 beweglich ist. Der Unterbau 131 weist mehrere Standfüsse 17-17"' auf, mit welchen er auf die Fahrbahn 2 gestellt wird. Nachdem der Unterbau 131 mit den Standfüssen 17-17"' auf die Fahrbahn 2 gestellt worden ist, ist er nicht mehr auf der Fahrbahn 2 beweglich. Vorzugsweise steht der Unterbau 131 über vier Standfüsse 17-17"' auf der Fahrbahn 2. Die vier Standfüsse 17-17"' sind an vier Ecken des rechteckigen Unterbaus 131 angeordnet.

Für eine unverrückbare Fixierung des Unterbaus 131 auf der Fahrbahn 2 kann die Vorrichtung 1 mit Fixiergewichten beschwert werden. Vorzugsweise weist die Vorrichtung 1 mehrere Ausleger 18-18"' auf, über welche der Unterbau 131 direkt und/oder die Standfüsse 17-17"' mit Fixiergewichten beschwert werden. Nach Fig. 1 wird auf jeden Standfuss 17-17"' ein Ausleger 18-18"' gelegt. Die Ausleger 18-18"' werden mit bildlich nicht dargestellten Fixiergewichten beschwert. Als Fixiergewicht können das Transportfahrzeug und ein Begleitfahrzeug verwendet werden, welche auf den Auslegern 18-18"' geparkt werden. Alternativ oder zusätzlich zu den Auslegern 18-18"' kann der Unterbau 131 auch über ein Vakuum zwischen den Standfüssen 17-17"' und der Fahrbahn 2 unverrückbar auf der Fahrbahn 2 fixiert werden. Dazu weist jeder Standfuss 17-17"' auf einer der Fahrbahn 2 zugewandten Seite eine Dichtung auf, welche einen Hohlraum zwischen dem Standfuss 17-17"' und der Fahrbahn 2 gasdicht dichten. Mit der Vakuumpumpe 26 wird in jedem Hohlraum ein Vakuum erzeugt. Das Vakuum wird mit einem Vakuummessgerät 27 gemessen. Das Vakuummessgerät 27 gibt einer Grösse des gemessenen Vakuums entsprechende elektrische Signale ab. Ein Vakuum von kleiner 700mbar saugt die Standfüsse 17-17"' mit einer Kraft von mehreren kN pro Standfuss 17-17"' auf die Fahrbahn 2. Auf diese Weise wird eine ausreichend grosse Gegenkraft erzeugt, um die Referenzkraft zu kompensieren, so dass der Unterbau 131 auf der Fahrbahn 2 unverrückbar fixiert ist. Details dazu sind in der schematischen Darstellung der Vorrichtung 1 nach Fig. 9 dargestellt.

Die Richtung in welcher der WIM Sensor 3 kalibriert wird, wird Kalibrierrichtung genannt. Nach Fig. 1 ist die Kalibierrichtung parallel zur Fahrtrichtung, der WIM Sensor 3 wird entlang der Fahrtrichtung kalibriert. Nach Fig. 2 ist die Kalibrierrichtung parallel zur Sensorlängsrichtung, der WIM Sensor 3 wird entlang der Sensorlängsrichtung kalibriert. In den Fig. 1 bis 4 ist die Kalibrierrichtung mit einem fetten Pfeil eingezeichnet. Eine Strecke, entlang welcher der WIM Sensor 3 in Kalibrierrichtung kalibriert wird, wird Kalibrierstrecke 14 genannt. In Fig. 1 und 2 ist die Kalibrierstrecke 14 strichpunktiert eingezeichnet. Die Kalibrierstrecke 14 ist vom Rahmen 13 umschlossen. Das Kalibrieren des in der Fahrbahn 2 eingebauten WIM Sensors 3 erfolgt also innerhalb des Rahmens 13.

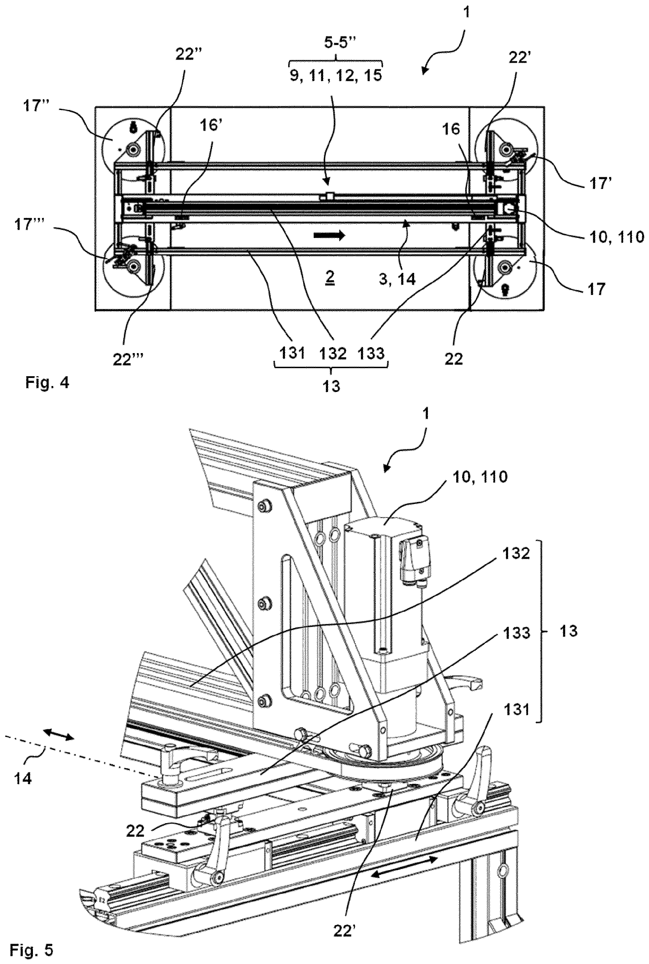

Der Längsträger 132 erstreckt sich parallel zur Kalibrierstrecke 14. Für ein Positionieren der Kalibrierstrecke 14 bezüglich des Einbauortes des WIM Sensors 3 weist der Rahmen 13 eine Führung 133 auf. Die Führung 133 ist zwischen dem Längsträger 132 und dem Unterbau 131 angeordnet. Der Längsträger 132 ist mittels der Führung 133 gegenüber dem Unterbau 131 beweglich. Fig. 5 zeigt dazu Details. Die Führung 133 weist mindestens einen Schlitten auf, welcher senkrecht zur Kalibrierrichtung beweglich ist. Vorzugsweise ist der Schlitten auf einem Profil beweglich geführt. Der Längsträger 132 kann auf dem Schlitten bezüglich des am Einbauort des WIM Sensors 3 stehenden Unterbaus 131 um +/-100mm senkrecht zur Kalibrierrichtung bewegt werden. Dies ist in Fig. 5 mit einem langen Doppelpfeil dargestellt. Über Festsetzhebel kann der Schlitten an einer gewünschten Position manuell festgesetzt werden. Die Führung 133 weist mindestens eine Längseinstellung auf, mittels welcher der Längsträger 132 in und entgegen der Kalibrierrichtung beweglich ist. Die Längseinstellung besteht vorzugsweise aus zwei Profilen, welche aufeinander liegen und gegeneinander beweglich sind. Über Schraubverbindungen können die beiden Profile in einer gewünschten Position festgesetzt werden. Der Längsträger 132 kann mit der Längseinstellung bezüglich des am Einbauort des WIM Sensors 3 stehenden Unterbaus 131 um +/-10mm in Kalibrierrichtung bewegt werden. Dies ist in Fig. 5 mit einem kurzen Doppelpfeil dargestellt. Der Längsträger 132 kann mit der Längseinstellung auch um einen spitzen Winkel zur Kalibrierrichtung bewegt werden. Mittels der Führung 133 lässt sich der Längsträger 132 mit einer Genauigkeit von kleiner 1.0mm bezüglich einer gewünschten Position bewegen und bezüglich des Einbauortes des WIM Sensors 3 positionieren.

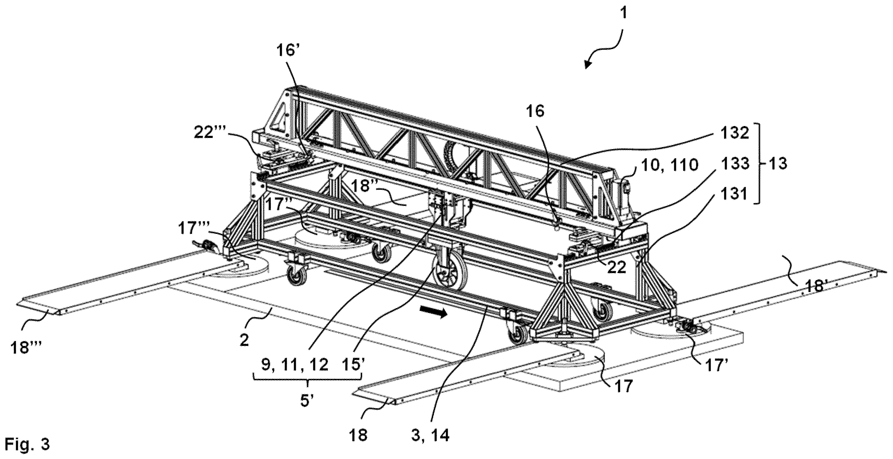

Die Vorrichtung 1 weist mindestens einen Positionssensor 16, 16' auf, um die Position der Kalibrierstrecke 14 bezüglich des Einbauortes des WIM Sensors 3 zu erfassen. Vorzugsweise ist der Positionssensor 16, 16' ein Lichtsender wie eine Leuchtdiode, eine Laserdiode, usw. Der Positionssensor 16, 16' sendet einen sichtbaren Lichtstrahl mit einem Durchmesser von kleiner 1.0mm aus. Vorzugsweise ist der Positionssensor 16, 16' starr am Längsträger 132 befestigt und eine Projektion des Lichtstrahls auf der Fahrbahn 2 definiert eine Position der Kalibrierstrecke 14. Der Längsträger 132 wird bewegt, dass die Projektion des Lichtstrahles auf den Einbauort des WIM Sensors 3 fällt. Nach Fig. 3 und 4 sind zwei Positionssensoren 16, 16' räumlich voneinander beabstandet am Längsträger 132 befestigt. Die Projektionen der Lichtstrahlen der zwei Positionssensoren 16, 16' auf der Fahrbahn 2 sind räumlich voneinander beabstandet und definieren zwei räumlich voneinander beabstandete Positionen der Kalibrierstrecke 14. Vorzugsweise definiert die Projektion des Lichtstrahles eines ersten Positionssensors 16 eine Anfangsposition der Kalibrierstrecke 14 auf der Fahrbahn 2 und die Projektion des Lichtstrahles eines zweiten Positionssensors 16' definiert eine Endposition der Kalibrierstrecke 14 auf der Fahrbahn 2. Wenn nun diese beiden Projektionen der Lichtstrahlen auf den Einbauort des WIM Sensors 3 fallen, sind eine Anfangsposition und eine Endposition der Kalibrierstrecke 14 bezüglich des Einbauortes des WIM Sensors 3 erfasst. Das Erfassen der Position der Kalibrierstrecke 14 bezüglich des Einbauortes des WIM Sensors 3 erfolgt mit einer Genauigkeit von kleiner 1.0mm. Bei Kenntnis der vorliegenden Erfindung kann der Fachmann auch mehr als zwei Positionssensoren vorsehen. Auch kann der Fachmann nur einen Positionssensor vorsehen, welcher entlang einer Sensorführung beweglich am Längsträger angeordnet ist und so durch die Sensorführung geführt an mehreren räumlich voneinander beabstandeten Anordnungen am Längsträger räumlich voneinander beabstandete Positionen der Kalibrierstrecke definiert.

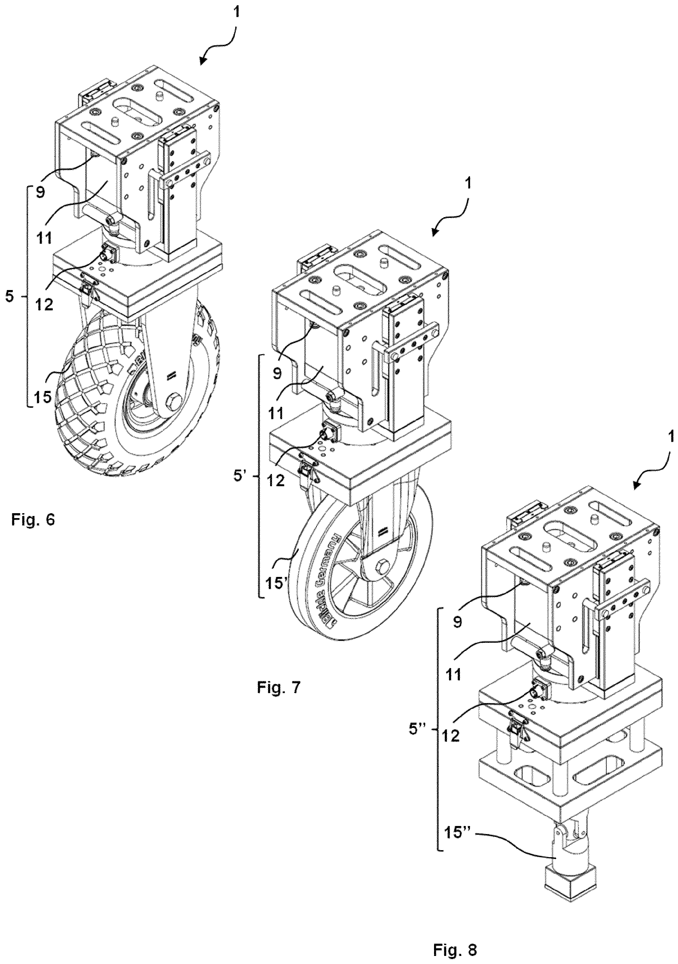

Der Aktuator 11 erzeugt eine Referenzkraft, mit welcher der WIM Sensor 3 kalibriert wird. Vorzugsweise ist der Aktuator 11 ein Pneumatikzylinder. Dazu weist die Vorrichtung 1 eine Pneumatikpumpe 19, ein Pneumatikventil 20 und eine Pneumatikregeleinheit 21 auf, was schematisch in Fig. 8 dargestellt ist. Die Pneumatikpumpe 19 erzeugt Pressluft. Über das Pneumatikventil 20 gelangt Pressluft in eine Zuführung, das Pneumatikventil 20 kann einen Zugang der Pressluft zur Zuführung öffnen und verschliessen. Der Pneumatikzylinder wird mit der Pressluft beaufschlagt. Die Pneumatikregeleinheit 21 regelt eine Menge und eine zeitliche Dauer des Beaufschlagens. Durch Beaufschlagen des Pneumatikzylinders wird die Referenzkraft erzeugt. Vorzugsweise beträgt die Referenzkraft 100N bis 10kN. Die Referenzkraft wird mit einer Genauigkeit von kleiner 0.01% erzeugt. Die Referenzkraft ist mit dieser Genauigkeit über einen Zeitraum von 1msec bis 100sec konstant.

Der Kraftsensor 12 erfasst die Referenzkraft. Vorzugsweise wirkt der Pneumatikzylinder direkt auf den Kraftsensor 12. Vorzugsweise ist der Kraftsensor 12 ein piezoelektrischer Kraftaufnehmer, welcher der Grösse einer erfassten Referenzkraft proportionale elektrische Signale abgibt. Der Kraftsensor 12 erfasst die Referenzkraft mit einer Genauigkeit von kleiner 0.01% und mit einer zeitlichen Auflösung von kleiner 1kHz. Die Genauigkeit beim Erzeugen der Referenzkraft sowie beim Erfassen der Referenzkraft ist somit um mindestens eine Grössenordnung höher, als die in der Norm OIML R-134 empfohlene Genauigkeit beim Bestimmen des Gesamtgewichtes eines fahrenden Fahrzeuges.

Vorzugsweise weist die Vorrichtung mindestens einen Störkraftsensor 22-22"' auf. Der Störkraftsensor 22-22"' ist am Rahmen 13 befestigt und erfasst eine Störkraft. Die Störkraft ist eine Kraft, welche beim Kalibrieren des in der Fahrbahn 2 eingebauten WIM Sensors 3 auf den Rahmen 13 wirkt. Die Störkraft kann eine Vibration sein, welche von einer Antriebseinheit 10 stammt. Die Störkraft kann auch eine Reaktionskraft sein, welche vom Abrollen eines Rades eines Applikators 15, 15' auf der Fahrbahn 2 stammt. Die Störkraft kann auch von mechanischen Stössen beim Abrollen eines Rades eines Applikators 15, 15' über Unebenheiten auf der Fahrbahn 2 stammen. Nach Fig. 2 bis 5 sind vier Störkraftsensoren 22-22"' im Bereich der Führung 133 zwischen dem Längsträger 132 und dem Unterbau 131 befestigt. Auch der Störkraftsensor 22-22"' ist vorzugweise ein piezoelektrischer Kraftaufnehmer, welcher der Grösse der erfassten Störkraft proportionale elektrische Signal abgibt. Die vier Störkraftsensoren 22-22"' sind voneinander räumlich beabstandet am Rahmen 13 angeordnet und bilden ein Dynamometer. Das Dynamometer fasst nicht nur mehrere Komponenten einer Störkraft, sondern auch mehrere Komponenten von Störmomenten. Der Störkraftsensor 22-22"' erfasst die Störkraft mit einer Genauigkeit von kleiner 0.01% und mit einer zeitlichen Auflösung von kleiner 1kHz. Bei Kenntnis der Erfindung kann der Fachmann anstelle eines am Rahmen befestigten Störkraftsensors auch einen am Gefährt befestigten Störkraftsensor in der Ausführungsform eines Dynamometers verwenden.

Die Vorrichtung 1 weist mindestens einen Applikator 15-15" zum Einbringen der Referenzkraft in die Fahrbahn 2. Vorzugsweise wirkt der Pneumatikzylinder direkt auf den Applikator 15-15". Aktuator 11, Kraftsensor 12 und Applikator 15-15" sind mechanisch miteinander verbunden und bilden ein Gefährt 5-5". Dazu zeigen die Fig. 6 bis 8 drei Ausführungsformen eines Gefährtes 5-5" mit unterschiedlichen Applikatoren 15-15". Nach Fig. 6 ist der Applikator 15 breiträdrig mit einem breiten Rad. Das breite Rad ist 100mm bis 200mm breit. Das breite Rad ist also deutlich breiter als die Breite des WIM Sensors 3 in Fahrtrichtung. Auch ist das breite Rad deutlich breiter als der gegenseitige Abstand der piezoelektrischen Aufnehmerelemente im WIM Sensor 3. Nach Fig. 7 ist der Applikator 15' schmalrädrig mit einem schmalen Rad. Das schmale Rad ist 30mm bis 50mm breit. Das schmale Rad ist also so breit wie die Breite des WIM Sensors 3 in Fahrtrichtung. Auch ist das schmale Rad schmaler als der gegenseitige Abstand der piezoelektrischen Aufnehmerelemente im WIM Sensor 3. Nach Fig. 8 ist der Applikator 15" stempelförmig mit einem rechteckigen Stempel. Ein Durchmesser des Stempels beträgt 30mm bis 50mm. Der Durchmesser des Stempels ist also so breit wie die Breite des WIM Sensors 3 in Fahrtrichtung. Der Durchmesser des Stempels ist schmaler als der gegenseitige Abstand der piezoelektrischen Aufnehmerelemente im WIM Sensor 3.

Das Gefährt 5-5" ist bezüglich der Fahrbahn 2 unterhalb des Längsträgers 132 angeordnet. Der Längsträger 132 weist einen Führungsschiene auf und das Gefährt 5-5" ist in der Führungsschiene entlang der Kalibrierstrecke 14 verfahrbar. Das Gefährt 5-5" ist im vom Unterbau 131 umschlossenen Oberflächenbereich der Fahrbahn 2 verfahrbar. Menschen, welche sich auf der Fahrbahn 2 befinden, sind durch den Unterbau 131 vom Gefährt 5-5" räumlich getrennt, wodurch die Sicherheit der Menschen beim Kalibrieren des WIM Sensors 3 gewährleistet wird.

Die Vorrichtung 1 weist eine Antriebseinheit 10 zum Verfahren des Gefährtes 5-5" auf. Vorzugsweise ist die Antriebseinheit 10 ein elektrischer Antrieb wie ein Asynchronmotor. Die Antriebseinheit 10 wird von einer Antriebssteuereinheit 28 gesteuert. Nach Fig. 5 ist die Antriebseinheit 10 an einem Ende des Längsträgers 132 befestigt und ist mit dem Gefährt 5-5" über einen Riemen mechanisch verbunden. Eine Rotation einer Welle der Antriebseinheit 10 wird so in eine Translation des Gefährtes 5-5" umgesetzt. Eine von der Antriebseinheit 10 erzeugte Antriebskraft wird über den Riemen auf das Gefährt 5-5" übertragen. Vorzugsweise wird das Gefährt 5-5" mit einer Geschwindigkeit von bis zu 1.0m/sec entlang der Kalibrierstrecke 14 verfahren. Vorzugsweise wird das Gefährt 5-5" mit einer Beschleunigung von bis zu 1.0m/sec² entlang der Kalibrierstrecke 14 beschleunigt und abgebremst.

Die Referenzkraft wird somit durch kontinuierliches Abrollen des Rades des Applikators 15, 15' kontinuierlich entlang der Kalibrierstrecke 14 in die Fahrbahn 2 eingebracht oder die Referenzkraft wird durch diskontinuierliches Aufsetzen des Stempels des Applikators 15" entlang der Kalibrierstrecke 14 diskontinuierlich in die Fahrbahn 2 eingebracht. Beim diskontinuierlichen Einbringen der Referenzkraft wird der Stempel des Applikators 15" entlang der Kalibrierstrecke 14 an mehreren Kalibrierpositionen positioniert. Die Kalibrierpositionen sind in vordefinierter Distanz zueinander. Vorzugsweise wird die Referenzkraft nur an den Kalibrierpositionen in die Fahrbahn 2 eingebracht. Der Applikator 15" wird ohne Referenzkraft von einer Kalibrierposition zur nächsten verfahren. So wird der Stempel des Applikators 15" an piezoelektrischen Aufnehmerelementen des WIM Sensors 3 positioniert und piezoelektrische Aufnehmerelemente werden einzeln mit einer vordefinierten Referenzkraftrampe kalibriert. Die Referenzkraftrampe besteht aus mehreren verschieden grossen Referenzkräften. Vorzugsweise variiert eine Grösse der Referenzkräfte einer Referenzkraftrampe über eine Grössenordnung. Die Referenzkraftrampe wird hinauf und/oder heruntervariiert. Somit werden für jedes piezoelektrische Aufnehmerelement eine Empfindlichkeit, eine Linearität und eine Hysterese charakterisiert.

Vorzugsweise weist die Antriebseinheit 10 einen Inkrementalgeber 110 auf, welcher an der Welle der Antriebseinheit 10 montiert ist und Winkelpositionen der Welle beim Verfahren des Gefährtes 5-5" entlang der Kalibrierstrecke 14 erfasst. Der Inkrementalgeber 110 erfasst Winkelpositionen mit einer Winkelauflösung von kleiner 1Grad und einer zeitlichen Auflösung von kleiner 1kHz. Das Verfahren des Gefährtes 5-5" entlang der Kalibrierstrecke 14 lässt sich so mit einer Positionsauflösung kleiner 1.0mm messen. Zur Definition einer Referenzposition für den Inkrementalgeber 110 wird das Gefährt 5-5" an einen Positionsgeber am Anfang oder am Ende der Kalibrierstrecke 14 verfahren. Der Positionsgeber erfasst das Gefährt 5-5" in der Referenzposition auf der Kalibrierstrecke 14. Der Positionsgeber kann ein induktiver Aufnehmer, ein magnetischer Aufnehmer, ein mechanischer Anschlag, usw. sein. Der Inkrementalgeber 110 gibt den erfassten Winkelpositionen entsprechende elektrische Signale ab. Auch gibt der Positionsgeber ein der erfassten Referenzposition entsprechendes elektrisches Signal ab. Durch Auswerten der zu verschiedenen Zeiten an verschiedenen Positionen der Kalibrierstrecke 14 erfassten Winkelpositionen wird das Verfahren des Gefährtes 5-5" positionsaufgelöst zeitlich erfasst. Durch Auswerten der erfasst Referenzposition erfolgt ein absolutes Positionieren des Gefährts 5-5" entlang der Kalibrierstrecke 14.

Vorzugsweise weist das Gefährt 5-5" mindestens einen Oberflächenprofilsensor 9 auf. Der Oberflächenprofilsensor 9 erfasst ein Oberflächenprofil der Fahrbahn 2 entlang der Kalibrierstrecke 14. Das Oberflächenprofil zeigt Schwellen oder Senken in der Oberfläche der Fahrbahn 2 auf. Der Oberflächenprofilsensor 9 ist starr am Gefährt 5-5" befestigt. Der Oberflächenprofilsensor 9 weist mindestens einen Lichtsender wie eine Laserdiode, Leuchtdiode, usw. auf. Der optische Sensor ist auf die Kalibrierstrecke 14 ausgerichtet und sendet einen Lichtstrahl auf die Kalibrierstrecke 14. Der Lichtstrahl wird von der Oberfläche der Fahrbahn 2 an der Kalibrierstrecke 14 reflektiert. Der Oberflächenprofilsensor 9 weist mindestens einen Lichtempfänger wie eine Photodiode, einen Photowiderstand, usw. auf. Der Lichtempfänger ist ebenfalls auf die Kalibrierstrecke 14 ausgerichtet und erfasst den von der Oberfläche der Fahrbahn 2 an der Kalibrierstrecke 14 reflektierten ausgesendeten Lichtstrahl. Wenn sich eine Entfernung vom Oberflächenprofilsensor 9 zur Oberfläche der Fahrbahn 2 an der Kalibrierstrecke 14 durch Schwellen oder Senken in der Oberfläche der Fahrbahn 2 ändert, so ändert sich auch ein Winkel, unter dem der reflektierte ausgesendete Lichtstrahl erfasst wird. Beim Verfahren des Gefährtes 5-5" entlang der Kalibrierstrecke 14 erfasst der Oberflächenprofilsensor 9 somit eine Änderung der Entfernung mit einer Entfernungsauflösung von kleiner 1mm und einer zeitlichen Auflösung von kleiner 1kHz. Der Oberflächenprofilsensor 9 gibt der erfassten Änderung der Entfernung entsprechende elektrische Signale ab. Durch Auswerten der an verschiedenen Positionen der Kalibrierstrecke 14 erfassten Änderung der Entfernung wird das Oberflächenprofil der Fahrbahn 2 entlang der Kalibrierstrecke 14 hochgenau ermittelt. Falls das Oberflächenprofil Schwellen oder Senken aufzeigt, die grösser als ein vordefinierter Schwellenwert sind, kann ein Bedarf auf Nachbearbeitung des Einbauortes des WIM Sensors 3 in der Fahrbahn 2 angeordnet werden. Das Oberflächenprofil der Fahrbahn 2 kann zweidimensional oder dreidimensional ermittelt werden. Bei einem zweidimensionalen Oberflächenprofil wird die Änderung der Entfernung zur Oberfläche der Fahrbahn 2 auf einer Linie entlang der Kalibrierrichtung erfasst. Bei einem dreidimensionalen Oberflächenprofil wird die Änderung der Entfernung zur Oberfläche der Fahrbahn 2 für eine Breite der Fahrbahn 2 entlang der Kalibrierrichtung erfasst. Vorzugsweise ist die Breite der Fahrbahn 2 mindestens so breit wie die Breite des WIM Sensors 3.

Mindestens eine elektrische Stromversorgung 25, 25' produziert elektrischen Strom für die Vorrichtung 1, so dass diese autark betrieben werden kann. Vorzugsweise produziert eine erste elektrische Stromversorgung 25 elektrischen Dreiphasenstrom für die Pneumatikpumpe 19 und die Vakuumpumpe 26, während eine zweite elektrische Stromversorgung 25' Einphasenstrom für die Antriebseinheit 10, die Antriebssteuereinheit 28, die Datenerfassungseinheit 30 und die Recheneinheit 31 produziert. Details dazu sind in der schematischen Darstellung der Vorrichtung 1 nach Fig. 9 dargestellt.

Über einen Starter 29 wird das Kalibrieren des in die Fahrbahn 2 eingebauten WIM Sensors 3 gestartet und gestoppt. Der Starter 29 funktioniert ebenfalls als Totmanneinrichtung, wo überprüft wird, ob ein Mensch, welcher die Vorrichtung 1 bedient, anwesend und handlungsfähig ist.

Die Datenerfassungseinheit 30 erfasst digitalen Daten der Auswerteeinheit 4 über die Grösse der vom WIM Sensor 3 erfassten Gewichtskraft. Die Datenerfassungseinheit 30 erfasst vom Inkrementalgeber 110 elektrische Signale über die Winkelposition der Welle der Antriebseinheit 10. Die Datenerfassungseinheit 30 erfasst vom Positionsgeber ein elektrisches Signal über die Referenzposition des Gefährts 5-5" auf der Kalibrierstrecke 14. Die Datenerfassungseinheit 30 erfasst vom Oberflächenprofilsensor 9 elektrische Signale über die vom Oberflächenprofilsensor 9 erfasste Änderung der Entfernung. Die Datenerfassungseinheit 30 erfasst vom Kraftsensor 12 elektrische Signale über die vom Kraftsensor 12 erfasste Referenzkraft. Die Datenerfassungseinheit 30 erfasst vom Störkraftsensor 22-22"' elektrische Signale über die vom Störkraftsensor 22-22"' erfasste Störkraft. Die Datenerfassungseinheit 30 erfasst vom Vakuummessgerät 27 elektrische Signale über die vom Vakuummessgerät 27 gemessene Grösse des Vakuums. Die Datenerfassungseinheit 30 kann erfasste elektrische Signale elektrisch verstärken und zu digitalen Daten wandeln.

Die Recheneinheit 31 ist ein Computer mit Datenspeicher und Prozessor. Im Datenspeicher ist mindestens ein Auswerteprogramm geladen, welches Auswerteprogramm vom Prozessor ausgeführt wird. Die Datenerfassungseinheit 30 kommuniziert mit der Recheneinheit 31. So übermittelt die Datenerfassungseinheit 30 digitale Daten an die Recheneinheit 31, welche im Auswerteprogramm ausgewertet werden. Im Auswerteprogramm werden digitale Daten über die vom WIM Sensor 3 erfasste Gewichtskraft mit der vom Kraftsensor 12 erfassten Referenzkraft verglichen. Im Auswerteprogramm wird aus digitalen Daten der Änderungen der Entfernung vom Oberflächenprofilsensor 9 zur Oberfläche der Fahrbahn 2 an verschiedenen Positionen der Kalibrierstrecke 14 ein Oberflächenprofil der Fahrbahn 2 entlang der Kalibrierstrecke 14 ermittelt.

Das Auswerteprogramm vergleicht digitale Daten der erfassten Gewichtskraft mit digitalen Daten der erfassten Referenzkraft. Ein Ergebnis des Vergleiches ist ein Kalibrierwert oder eine Kalibrierfunktion. Das Auswerteprogramm berücksichtigt bei dem Vergleich auch digitale Daten der erfassten Störkraft sowie des ermittelten Oberflächenprofils. Digitale Daten der erfassten Gewichtskraft werden mit digitalen Daten der erfassten Referenzkraft und mit digitalen Daten der erfassten Störkraft sowie mit digitalen Daten des ermittelten Oberflächenprofils verglichen. Auch wird eine erfasste Gewichtskraft mit dem Oberflächenprofil korrigiert, beispielsweise indem Schwellen oder Senken im Oberflächenprofil berücksichtigt werden.

Auch übermittelt die Recheneinheit 31 digitale Daten zum Verfahren des Gefährtes 5-5" entlang der Kalibrierstrecke 14 an die Datenerfassungseinheit 30, welche digitale Daten in der Datenerfassungseinheit 30 in elektrische Signale gewandelt werden. Die Datenerfassungseinheit 30 übermittelt an die Antriebssteuereinheit 28 elektrische Signale zum Verfahren des Gefährtes 5-5" entlang der Kalibrierstrecke 14 mittels der Antriebseinheit 10. So übermittelt sie elektrische Signale an die Antriebssteuereinheit 28 zum Starten und Stoppen des Verfahrens des Gefährtes 5-5".

Vorzugsweise wird der in der Fahrbahn 2 eingebaute WIM Sensor 3 mindestens einmal mit der Kalibrierrichtung parallel zur Fahrtrichtung kalibriert und mindestens einmal mit der Kalibrierrichtung parallel zur Sensorlängsrichtung kalibriert. Vorzugsweise wird der in der Fahrbahn 2 eingebaute WIM Sensor 3 in einem Raster bestehend aus mehreren Kalibrierstrecken 14 kalibriert. Die Kalibrierstrecken 14 verlaufen im Raster parallel zueinander und sind in einem gegenseitigen Abstand von 20mm bis 200mm.

Bei Kalibrierrichtung parallel zur Fahrtrichtung wird ein WIM Sensor 3 mit beispielsweise zehn piezoelektrischen Aufnehmerelementen im gegenseitigen Abstand von 100mm vorzugsweise in einem Raster von Kalibrierstrecken 14 kalibriert, deren gegenseitiger Abstand 50mm beträgt. So wird jedes piezoelektrische Aufnehmerelement kalibriert, indem die Vorrichtung 1 in Fahrtrichtung in einem Bereich über den WIM Sensor 3 gefahren wird, wo das piezoelektrische Aufnehmerelement angeordnet ist, hier misst das piezoelektrische Aufnehmerelement eine grosse Gewichtskraft. Und zudem wird jedes piezoelektrische Aufnehmerelement kalibriert, indem die Vorrichtung 1 in Fahrtrichtung in einem Bereich zwischen zwei benachbarten piezoelektrischen Aufnehmerelementen über den WIM Sensor 3 gefahren wird, hier messen beide piezoelektrischen Aufnehmerelemente eine gleichgrosse Gewichtskraft.

Bei Kalibrierrichtung parallel zur Sensorlängsrichtung wird ein WIM Sensor 3 mit einer Breite von 40mm vorzugsweise in einem Raster von Kalibrierstrecken 14 kalibriert, deren gegenseitiger Abstand 40mm beträgt. So wird der WIM Sensor 3 kalibriert, indem die Vorrichtung 1 in Sensorlängsrichtung genau über den Einbauort des WIM Sensors 3 gefahren wird, hier misst der WIM Sensor 3 eine grosse Gewichtskraft und auch jedes der piezoelektrischen Aufnehmerelemente misst eine grosse Gewichtskraft. Und zudem wird der WIM Sensor 3 kalibriert, indem die Vorrichtung 1 in Sensorlängsrichtung in einem Abstand von 40mm zum Einbauort des WIM Sensors 3 verfahren wird, hier misst der WIM Sensor 3 eine kleine Gewichtskraft und auch jedes der piezoelektrischen Aufnehmerelemente misst eine kleine Gewichtskraft.

### Bezugszeichenliste

- 1: Vorrichtung
- 2: Fahrbahn
- 3: WIM Sensor
- 4: Auswerteeinheit
- 5-5": Gefährt
- 9: Oberflächenprofilsensor
- 10: Antriebseinheit
- 11: Aktuator
- 12: Kraftsensor
- 13: Rahmen
- 14: Kalibrierstrecke
- 15-15": Applikator
- 16,16': Positionssensor
- 17-17"': Standfuss
- 18-18"': Ausleger
- 19: Pneumatikpumpe
- 20: Pneumatikventil
- 21: Pneumatikregeleinheit
- 22-22"': Störkraftsensor
- 25,25': elektrische Stromversorgung
- 26: Vakuumpumpe
- 27: Vakuummessgerät
- 28: Antriebsteuereinheit
- 29: Starter
- 30: Datenerfassungseinheit
- 31: Recheneinheit
- 110: Inkrementalgeber
- 131: Unterbau
- 132: Längsträger
- 133: Führung

## Patentansprüche

1. Vorrichtung (1) zum Kalibrieren eines in eine Fahrbahn (2) eingebauten Weigh-In-Motion (WIM) Sensors (3); welche Vorrichtung (1) mindestens einen Kraftsensor (12) aufweist, welcher Kraftsensor (12) eine Referenzkraft erfasst, mit welcher Referenzkraft der WIM Sensor (3) kalibrierbar ist; welche Vorrichtung (1) einen Applikator (15-15") aufweist, mit welchem Applikator (15-15") die Referenzkraft in die Fahrbahn (2) einbringbar ist; **dadurch gekennzeichnet, dass** die Vorrichtung (1) einen Aktuator (11) aufweist, welcher Aktuator (11) die Referenzkraft erzeugt; und dass Aktuator (11), Kraftsensor (12) und Applikator (15-15") mechanisch miteinander verbunden sind und ein Gefährt (5-5") bilden.

2. Vorrichtung (1) nach Anspruch 1, **dadurch gekennzeichnet, dass** der WIM Sensor (3) entlang einer Kalibrierstrecke (14) kalibrierbar ist; und dass das Gefährt (5-5") entlang der Kalibrierstrecke (14) verfährt.

3. Vorrichtung (1) nach Anspruch 2, **dadurch gekennzeichnet, dass** die Vorrichtung (1) einen Rahmen (13) aufweist, welcher Rahmen (13) bezüglich eines Einbauortes des WIM Sensors (3) ortsfest positionierbar ist; und dass das Gefährt (5-5") im Rahmen (13) angeordnet ist.

4. Vorrichtung (1) nach Anspruch 3, **dadurch gekennzeichnet, dass** der Rahmen (3) einen Unterbau (131) und einen Längsträger (132) aufweist; dass der Unterbau (131) bezüglich einer Fahrbahn (2) unterhalb des Längsträgers (132) angeordnet ist; dass der Längsträger (132) eine Führungsschiene aufweist; und dass das Gefährt (5-5") in der Führungsschiene entlang der Kalibrierstrecke (14) fährt.

5. Vorrichtung (1) nach einem der Ansprüche 3 oder 4, **dadurch gekennzeichnet, dass** die Vorrichtung (1) eine Antriebseinheit (10) aufweist; dass die Antriebseinheit (10) am Längsträger (132) befestigt ist; und dass die Antriebseinheit (10) das Gefährt (5-5") entlang der Kalibrierstrecke (14) verfährt.

6. Vorrichtung (1) nach einem der Ansprüche 3 oder 4, **dadurch gekennzeichnet, dass** der Unterbau (131) mehrere Standfüsse (17-17"') aufweist, mit welchen er auf die Fahrbahn (2) stellbar ist; und dass der Unterbau (131) über ein Vakuum zwischen den Standfüssen (17-17"') und der Fahrbahn (2) unverrückbar auf der Fahrbahn (2) fixierbar ist; und/oder dass der Unterbau (131) über Fixiergewichte unverrückbar auf der Fahrbahn (2) fixierbar ist.

7. Vorrichtung (1) nach einem der Ansprüche 3 bis 6, **dadurch gekennzeichnet, dass** die Vorrichtung (1) mindestens einen Positionssensor (16, 16') aufweist; dass der Positionssensor (16, 16') ein Lichtsender ist, welcher einen sichtbaren Lichtstrahl aussendet, welcher auf die Fahrbahn (2) projizierbar ist; und dass eine Projektion des Lichtstrahles auf die Fahrbahn (2) eine Position der Kalibierstrecke (14) definiert.

8. Vorrichtung (1) nach Anspruch 7, **dadurch gekennzeichnet, dass** der Rahmen (3) eine Führung (133) aufweist; dass die Führung (133) zwischen dem Längsträger (132) und dem Unterbau (131) angeordnet ist; und dass der Längsträger (132) mittels der Führung (133) bezüglich des Einbauortes des WIM Sensors (3) positionierbar ist.

9. Vorrichtung (1) nach einem der Ansprüche 3 bis 8, **dadurch gekennzeichnet, dass** die Vorrichtung (1) mindestens einen Oberflächenprofilsensor (9) aufweist; dass der Oberflächenprofilsensor (9) eine Änderung einer Entfernung vom Oberflächenprofilsensor (9) zur Oberfläche der Fahrbahn (2) an der Kalibrierstrecke (14) erfasst; und dass aus an verschiedenen Positionen der Kalibrierstrecke (14) erfassten Änderungen der Entfernung ein Oberflächenprofil der Fahrbahn (2) entlang der Kalibrierstrecke (14) ermittelbar ist.

10. Verfahren zum Kalibrieren eines in eine Fahrbahn (2) eingebauten Weigh-In-Motion (WIM) Sensors (3), welcher WIM Sensor (3) entlang einer Kalibrierstrecke (14) kalibriert wird; wobei eine Referenzkraft von mindestens einem Kraftsensor (12) erfasst wird; wobei die Referenzkraft von einem Applikator (15-15") entlang der Kalibrierstrecke (14) in die Fahrbahn (2) eingebracht wird; wobei die Referenzkraft am Einbauort des WIM Sensors (3) vom WIM Sensor (3) als Gewichtskraft erfasst wird; und wobei die vom WIM Sensor (3) erfasste Gewichtskraft mit der erfassten Referenzkraft verglichen wird; **dadurch gekennzeichnet, dass** eine Position der Kalibrierstrecke (14) bezüglich eines Einbauortes des WIM Sensors (3) von mindestens einem Positionssensor (16, 16') erfasst wird; und dass der Applikator (15-15") entlang der erfassten Kalibrierstrecke (14) von einer Antriebseinheit (10) verfahren wird.

11. Verfahren nach Anspruch 10, **dadurch gekennzeichnet, dass** die Referenzkraft von einem Aktuator (11) erzeugt wird; und dass Aktuator (11), Kraftsensor (12) und Applikator (15-15") mechanisch miteinander verbunden sind und ein Gefährt (5-5") bilden, welches Gefährt (5-5") entlang der Kalibrierstrecke (14) von der Antriebseinheit (10) verfahren wird.

12. Verfahren nach Anspruch 11, **dadurch gekennzeichnet, dass** am Einbauort des WIM Sensors (3) ein Rahmen (3) gestellt wird; und dass der Rahmen (3) einen Längsträger (132) und eine Führung (133) aufweist, welcher Längsträger (132) mittels der Führung (133) bezüglich des Einbauortes des WIM Sensors (3) positioniert wird.

13. Verfahren nach einem der Ansprüche 10 bis 12, **dadurch gekennzeichnet, dass** der in der Fahrbahn (2) eingebaute WIM Sensor (3) mit einem breiträdrigen Applikator (15) verfahren wird, welcher ein Rad aufweist, das breiter als eine Breite des WIM Sensors (3) in einer Fahrtrichtung ist; oder dass der in der Fahrbahn (2) eingebaute WIM Sensor (3) mit einem schmalrädrigen Applikator (15') verfahren wird, welcher ein Rad aufweist, das von einer Breite des WIM Sensors (3) in einer Fahrtrichtung ist; oder dass der in der Fahrbahn (2) eingebaute WIM Sensor (3) mit einem stempelförmigen Applikator (15") verfahren wird, welcher einen Stempel aufweist, der einen Durchmesser von einer Breite des WIM Sensors (3) in einer Fahrtrichtung hat.

14. Verfahren nach einem der Ansprüche 10 bis 13, **dadurch gekennzeichnet, dass** ein stempelförmiger Applikator (15"), welcher stempelförmige Applikator (15") einen Stempel aufweist, entlang dem in der Fahrbahn (2) eingebauten WIM Sensor (3) verfahren wird,; dass der WIM Sensor (3) piezoelektrische Aufnehmerelemente aufweist und der Stempel an einzelnen piezoelektrischen Aufnehmerelementen positioniert wird; und dass die piezoelektrischen Aufnehmerelemente einzeln mit einer vordefinierten Referenzkraftrampe kalibriert werden.

15. Verfahren nach Anspruch 14, **dadurch gekennzeichnet, dass** die Referenzkraftrampe mehrere unterschiedlich grosse Referenzkräfte umfasst, wobei die Grösse der Referenzkräfte der Referenzkraftrampe über eine Grössenordnung variiert wird; und dass die Referenzkraftrampe an einzelnen piezoelektrischen Aufnehmerelementen hinauf und/oder heruntervariiert wird.

16. Verfahren nach einem der Ansprüche 10 bis 16, **dadurch gekennzeichnet, dass** der in der Fahrbahn (2) eingebaute WIM Sensor (3) mindestens einmal mit einer Kalibrierrichtung parallel zu einer Fahrtrichtung kalibriert wird; dass der in der Fahrbahn (2) eingebaute WIM Sensor (3) mindestens einmal mit einer Kalibrierrichtung parallel zu einer Sensorlängsrichtung kalibriert wird; und dass der in der Fahrbahn (2) eingebaute WIM Sensor (3) in einem Raster bestehend aus mehreren Kalibrierstrecken (14) kalibriert wird, welche Kalibrierstrecken (14) im Raster parallel zueinander verlaufen.
